# EUROPEAN PATENT SPECIFICATION

(11) **EP 1 270 749 B1**
(45) Date of publication and mention of the grant of the patent: **14.12.2005**
(21) Application number: 02254273.2
(22) Date of filing: 19.06.2002
(51) Int. Cl.: C21D 1/74, C22F 1/02, F27B 9/00

(54) **Method for continuous heat-treatment of metals under argon atmosphere**
Verfahren zur kontinuierlichen Wärmebehandlung von Metallen unter Argonatmosphäre
Procedé pour le traitement thermique continu des métaux sous l'atmosphère d'argon

(30) Priority: 19.06.2001 JP 2001184844
(43) Date of publication of application: 02.01.2003
(73) Proprietor: Kanto Yakin Kogyo Kabushiki Kaisha, Hiratsuka-shi, Kanagawa-ken (JP)
(72) Inventor: Takahashi, Susumu, Yokohama, Kanagawa-ken (JP)
(74) Representative: Lord, Hilton David

(56) References cited:
- EP-A- 0 075 438
- EP-A- 1 207 001
- US-A- 3 522 020
- US-A- 5 629 091
- PATENT ABSTRACTS OF JAPAN vol. 2000, no. 13, 5 February 2001 (2001-02-05) -& JP 2000 273528 A (KANTO YAKIN KOGYO KK), 3 October 2000 (2000-10-03)
- PATENT ABSTRACTS OF JAPAN vol. 018, no. 616 (M-1710), 24 November 1994 (1994-11-24) -& JP 06 238433 A (KANTO YAKIN KOGYO KK), 30 August 1994 (1994-08-30)

## Description

The present invention relates to methods for continuously heat-treating metals under an inert gas atmosphere within a tunnel-like continuous furnace. Suitable metals are, in particular, alloys containing one or more volatile metals, such as zinc, manganese, chromium, aluminium, and so on.

An example of heat-treatment of such alloys is brazing stainless steel sheets or plates with a nickel-based solder which contains chromium. However, this kind of heat-treatment cannot be suitably performed under a vacuum, as the solder will be dechromised. Furthermore, this type of brazing cannot be performed under a nitrogen atmosphere, as the chromium contained in the solder will be nitrided. Thus, this kind of brazing has, so far, been conducted manually, piece by piece, in air.

When it is desired to braze stainless steel parts in large quantities, either a batch at a time or successively, the parts can be brazed with oxide-free copper. However, modem demands require improvements in the physical characteristics, specifically thermostability, of the brazed portions of the stainless steel part produced by this method. These improvements could be achieved using chromium-containing solder, provided that effective brazing can still be performed in large quantities. However, as described above, the use of chromium is beset by problems.

An example in which stainless steel plates were successively brazed under an argon atmosphere is described in our Japanese Preliminary Patent Publication, No.06-238433. However, the solder employed therein only comprised oxide-free copper.

Another Japanese Preliminary Patent Publication, No.2000-273528, also ours, describes a method in which argon was effectively used as a furnace atmosphere for heating metals. This publication teaches that chrome stainless steel was sintered without oxidation. However, it neither identifies the above-mentioned problems, for instance, that such a metallic alloy would readily be dechromised or nitrided when it is heated, nor is it directed to solving these problems.

In view of the aforementioned problems, it is an object of the present invention to provide a method for heating metallic alloy parts and articles, containing one or more volatile metals, such as zinc, manganese, chromium, and aluminium, so that they can effectively undergo various heat-treatments within a tunnel-like continuous atmosphere furnace, successively and in large quantities. It would also be desirable to provide such a method, wherein vaporisation or sublimation, of the volatile metals from their metallic alloy parts and articles, and the effects of chemical reactions such as nitriding, are reduced or substantially eliminated.

Surprisingly, we have found that, despite the fact that tunnel-like continuous furnaces are generally operated at a pressure of 0.1 to 0.5 Pa, the atmospheric pressure within the furnace can be elevated when argon gas is employed as the furnace atmosphere. This is because argon has a specific gravity, or density, of 1.783 Kg/m³, which is considerably higher than the specific gravity of air, which is 1.293 Kg/m³. The inert argon furnace atmosphere does not cause a chemical change in the metal alloy of the parts or articles to be heat-treated. Even when the alloys contain any number of volatile metals, such as zinc, manganese, chromium, or aluminium, a high furnace atmospheric pressure, sustained by argon, reduces or substantially eliminates vaporisation or sublimation of these volatile metals.

Thus, in a first aspect of the present invention, there is provided a method for heat-treating a metallic alloy, which comprises employing argon as an atmosphere of a tunnel-like continuous heat-treating furnace, and heat-treating, under a pressure selectively produced by the argon atmosphere in the furnace, the metallic alloy, the alloy containing one or a plurality of volatile metals.

Volatile metals may also be termed vaporisable, or those which will be easily sublimated, and are typically metals which can dissociate from the primary metal, such as steel, where the alloy is a stainless steel, for example, under conditions of high temperature if the parameters of the present invention are not observed, for example. The inert gas atmosphere, according to the present invention, is primarily argon.

In a preferred embodiment the volatile metal is one or more of zinc, manganese, chromium, and aluminium. Preferably, the metallic alloy used in the present invention is a stainless steel.

In a preferred embodiment of the present invention, the method comprises the use of a nickel based solder comprising chromium, the heat treatment being effective to braze the steel with the solder.

A method according to the present invention can be used to sinter or to braze the metallic alloy. It is a preferred embodiment of the present invention that when the metallic alloy is an article made by moulding stainless steel powders, the heat-treating comprises sintering the article. It is also a preferred embodiment of the present invention, that these stainless steel powders further comprise manganese.

In an alternative, preferred embodiment of the present invention, the metallic alloy is brass comprising zinc. In this embodiment, it is preferred that the solder is a silver solder comprising zinc. In this instance, the heat-treatment comprises brazing the brass with the silver solder.

It is preferred that the pressure selectively produced under the argon atmosphere in the furnace is in the range of about 5.0 Pa to about 77.2 Pa. These values have been determined experimentally.

In a further preferred embodiment of the present invention, the pressure selectively produced under the argon atmosphere in the furnace is adjustable by controlling the height of an inlet and/or an outlet. These outlets provide ingress and egress for the articles/alloys to be heat treated, and are for loading and unloading the metallic alloy into and from the tunnel-like continuous heat-treating furnace. It is preferred that the pressure in the furnace is raised by slantingly elevating the inlet and outlet, the density of the argon serving to assist in elevating the pressure in the furnace. The pressure may be increased in the furnace by fully or partially sealing the inlet and/or outlet and pumping in the required atmospheric constituents.

Elevated furnace pressures can also aid in sealing the furnace inlet and outlet against the outer atmosphere, which had previously been a problem. In addition, such elevated furnace pressures make it easy to purge the furnace of gases and other materials, which unavoidably enter the furnace together with the parts or articles to be heat-treated therein. Foreign materials such as machine oils that are burnt out from the parts or articles can also be removed easily from the furnace by providing venting or flushing, for example.

The present invention will now be further illustrated with reference to accompanying Figures, in which:
Figure 1 is an explanatory sectional view of a tunnel-like continuous furnace, which can advantageously be employed for carrying out the method of the present invention;

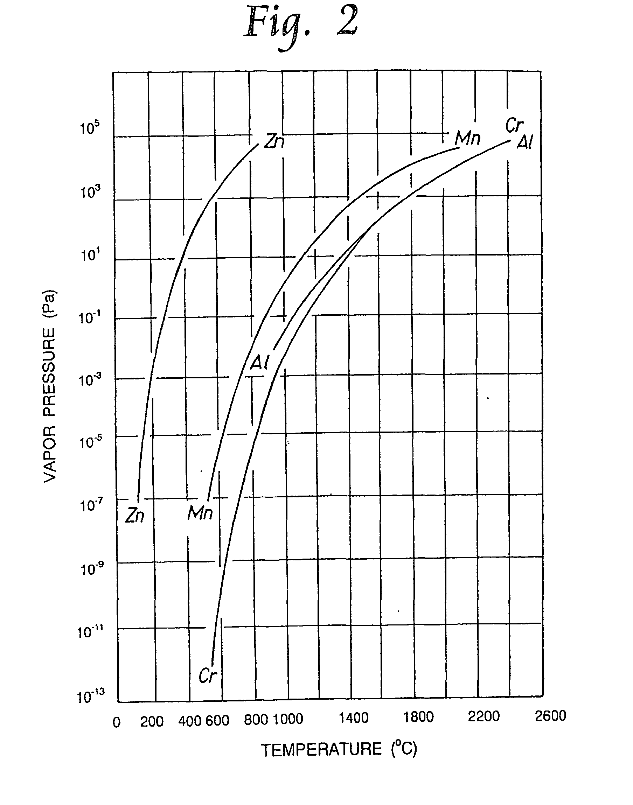

Figure 2 is a graph showing vapour pressures of volatile metals including zinc and others in relation with temperatures; and
Figure 3 is a view similar to Figure 1, showing another tunnel-like continuous furnace embodiment of the invention.

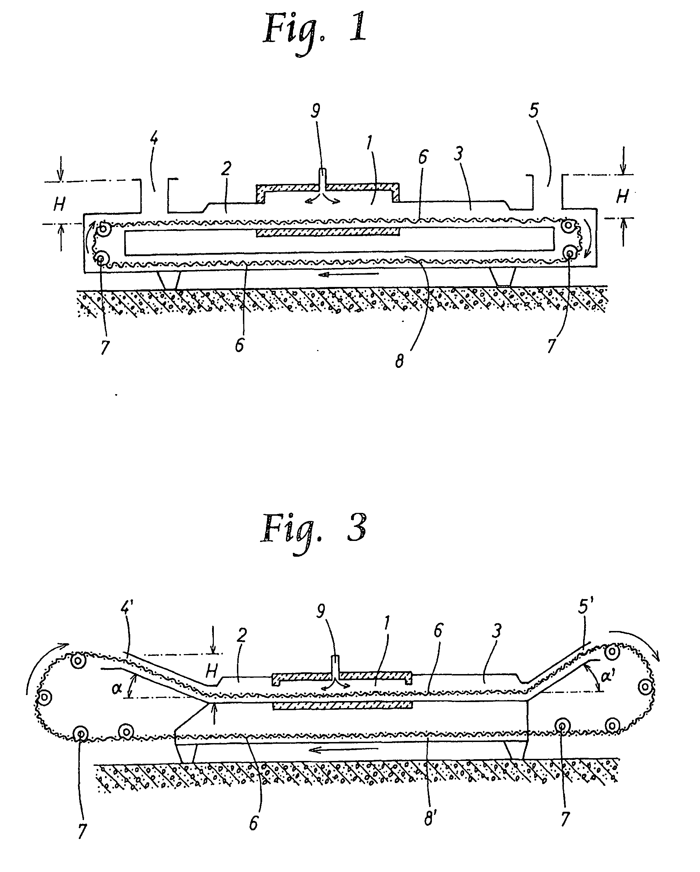

In the following Examples 1, 2, 3, and 4, the furnace shown in Figure 1 was employed.

As shown in Figure 1, the continuous furnace has a heating chamber 1, as well as a preheating chamber 2 and a cooling chamber 3. Chambers 2 and 3 are located on either side of the heating chamber. The chambers are connected to each other to make a tunnel-like furnace. The furnace has an inlet 4 and an outlet 5 adjacent to either end, and forms as a whole, and at its cross section, a U-shape with the heating chamber as its base. The walls of the heating chamber 1 are preferably made from carbonaceous materials, thereby providing means to dispose of oxygen or compounds thereof entering the furnace, the carbonaceous walls reacting therewith to generate carbon monoxide. Waste materials will then be flushed out or adsorbed into the furnace walls, thereby maintaining the partial pressure of oxygen in the furnace at appropriately low levels.

A continuous mesh belt 6, which is also preferably made from carbonaceous materials, circulates within the furnace. It is moved by driving rollers 7 in the direction illustrated by the arrows in Figure 1. A return passage 8, through which the unloaded belt 6 travels, is also hermetically sealed against the air, so that the argon gas, which is supplied into the furnace from a supply pipe 9, located at the top of the heating chamber 1, can be totally sealed within the furnace.

The inlet 4 works as a loading aperture, whilst the outlet 5 works as an aperture for removing parts or articles which are to be or have been heat-treated. These openings, which stand erect, in general above the height of the furnace, or at least above the height of the heating chamber 1, also serve as heads. These heads have a height H above the horizontal level of the loaded belt 6.

When the height H of heads 4 and 5 is selectively varied, the argon pressure inside the furnace varies as shown in Table 1.

**Table 1:**

| Height of Heads 4 and 5 with the resulting Furnace Pressure | | | | | |
|---|---|---|---|---|---|
| Height of Heads (mm) | 300 | 600 | 1200 | 2400 | 4800 |
| Furnace Pressure (Pa) | 5.0 | 10.0 | 19.3 | 38.5 | 77.2 |

The method of this invention was performed using a further embodiment of the present invention, another tunnel-like continuous furnace, illustrated in Figure 3. In Figure 3, those parts, which are same as those of Figure 1, are represented by the same reference numerals.

In this continuous furnace, an inlet 4'comprises a passage having an angle of incidence of α, resulting in a head of height H, while an outlet 5' comprises another passage which has a corresponding reflection angle of α', resulting in a head of the same height H. In this embodiment of the furnace according to the present invention, the return path of the belt 8' may not necessarily be hermetically sealed from the air.

When the inlet and outlet passages 4' and 5' of in each were slanted at angles of α and α', the height of the heads H corresponded to a height of 267mm, which height is sufficient to give an argon furnace pressure according to the present invention.

These types of inlet and outlet passages can advantageously be employed to readily load and unload metallic alloy articles, into and from, the furnace. It is a matter of course that heads of a higher height, that is, that are able to provide a higher argon furnace pressure, may be obtained by increasing the slanting angles and/or elongating the inlet and outlet tubular passages 4' and 5'.

As described above, according to the present invention, alloy articles containing volatile metals such as zinc, manganese, chromium, aluminium, and the like, can be subjected to various heat-treatments positively and continuously. Since a high furnace pressure is readily attained according to this invention, it becomes easier to exclude air from the inlet and outlet of a tunnel-like continuous furnace, so that the furnace atmosphere is not polluted by air. Accordingly, the consumption of argon gas for the furnace is reduced.

### EXAMPLE 1

SUS304 stainless steel sheets containing 18% of Cr and 8% of Ni were employed as test pieces. The test pieces were brazed with nickel-based solder BNi-5 containing 19% Cr at 1,200°C. In this instance, the height of heads 4 and 5 were set at 300mm (corresponding to a furnace argon pressure of 5.0 Pa). The test pieces thus brazed, were immersed in deionised water with 5 % wt/wt NaCl. Even when they were in the water for 96 hours, rust was not found on the test pieces, nor did they change colour.

The same test pieces which had been brazed under the same conditions as above, but within a vacuum furnace, were immersed in the similar deionised water. After only one hour in the water, rust was observed on these pieces.

### EXAMPLE 2

Test pieces were made by moulding SUS447J1 stainless steel powder containing 30% Cr. They were sintered at 1,300°C in the furnace with the heads 4 and 5 at heights of 300mm (corresponding to an argon furnace pressure of 5.0 Pa).

The test pieces which had been sintered, were immersed in deionised water with 5 % wt/wt NaCl, with the result that no rust was observed, even after immersion for 46 hours. No colour change was observed.

However, rust was found on those test pieces which had been heat-treated in a vacuum furnace, after they were immersed for 30 minutes in the same deionised water.

### EXAMPLE 3

Brass sheets containing 30% of zinc were brazed in the furnace at 700°C with a BAg-7 solder containing 18% of zinc.

Heights of the heads 4 and 5 were set at:
(1) 300mm (corresponding to an argon furnace pressure of 5.0 Pa),
(2) 1200mm (corresponding to an argon furnace pressure of 19.3 Pa), and
(3) 4800mm (corresponding to an argon furnace pressure of 77.2 Pa).

The results of brazing under conditions (1), (2), and (3) were visually observed, and are as follows.

Under condition (1), zinc evaporated from the solder, so that the melting point of the solder became higher, with the result that it could not melt thoroughly. The brass sheets became reddish, due to de-zincing.

Under condition (2), the solder melted completely so that brazing was achieved, although the brass sheets changed colour.

However, under condition (3), the solder melted completely, achieving fine brazing, and the brass sheets did not change colour.

### EXAMPLE 4

Powders of low nickel austenitic stainless steel containing 30% of Mn were moulded under pressure into test pieces. They were heated at 1,300°C in the furnace where the heads were set at a height of a 600mm (corresponding to an argon furnace pressure of 10.0 Pa or higher). The powders were well sintered and still contained Mn.

## Claims

1. A method for heat-treating a metallic alloy comprising one or more volatile components, the method comprising heating the alloy in a tunnel furnace under an argon-containing atmosphere, **characterised in that** the pressure selectively produced under the argon-containing atmosphere in the furnace is adjustable by controlling the height of an inlet and/or outlet, said inlet and outlet serving as heads, and is in excess of air pressure.

2. A method according to claim 1, wherein the volatile metal is at least one or more of zinc, manganese, chromium, and aluminium

3. A method according to claim 1 or 2, in which the metallic alloy is a stainless steel.

4. A method according to any preceding claim, wherein the method further comprises the use of a nickel based solder comprising chromium, and the heat-treating comprises brazing the steel with the solder.

5. A method according to claims 1 or 2, wherein the metallic alloy is an article made by moulding stainless steel powders, and the heat-treating comprised sintering the article.

6. A method according to claim 5, wherein the metallic alloy is an made by moulding stainless steel powders containing manganese.

7. A method according to claims 1 or 2, wherein the metallic alloy is brass comprising zinc, and the method further comprises the use of a silver solder containing zinc, and the heat-treating comprises brazing the brass with the silver solder.

8. A method according to any preceding claim, wherein the pressure selectively produced under the argon-containing atmosphere in the furnace is in a range from 5.0 Pa to 77.2 Pa.

9. A method according to any preceding claim, wherein said inlet and said outlet are for loading and unloading the metallic alloy into and from the furnace.

10. A method according to any preceding claim, wherein the pressure selectively produced under the argon-containing atmosphere, in the furnace is raised by slantingly elevating the inlet and outlet.

11. A method according to any preceding claim, wherein the atmosphere comprises only argon.

## Patentansprüche

1. Verfahren zur Wärmebehandlung einer Metallegierung, die eine oder mehrere flüchtige Komponenten aufweist, wobei das Verfahren das Erhitzen der Legierung in einem Tunnelofen unter einer argonhaltigen Atmosphäre aufweist, **dadurch gekennzeichnet, daß** der unter der argonhaltigen Atmosphäre in dem Ofen selektiv erzeugte Druck durch Steuerung der Höhe eines Einlasses und/oder Auslasses einstellbar ist, wobei Einlass und Auslass als Druckhöhen bzw. Gefälle dienen, und daß er höher als der Luftdruck ist.

2. Verfahren nach Anspruch 1, wobei das flüchtige Metall mindestens eines oder mehrere der Metalle Zink, Mangan, Chrom und Aluminium ist.

3. Verfahren nach Anspruch 1 oder 2, wobei die Metallegierung ein Edelstahl ist.

4. Verfahren nach einem der vorstehenden Ansprüche, wobei das Verfahren ferner die Verwendung von Lot auf Nickelbasis aufweist, das Chrom enthält, und die Wärmebehandlung das Hartlöten des Stahls mit dem Lot aufweist.

5. Verfahren nach Anspruch 1 oder 2, wobei die Metalllegierung ein durch Formpressen von Edelstahlpulvern hergestellter Artikel ist und die Wärmebehandlung das Sintern des Artikels aufweist.

6. Verfahren nach Anspruch 5, wobei die Metalllegierung ein durch Formpressen von manganhaltigen Edelstahlpulvern hergestellter Artikel ist.

7. Verfahren nach Anspruch 1 oder 2, wobei die Metalllegierung zinkhaltiges Messing ist, und wobei das Verfahren ferner die Verwendung eines zinkhaltigen Silberlots aufweist und die Wärmebehandlung das Hartlöten des Messings mit dem Silberlot aufweist.

8. Verfahren nach einem der vorstehenden Ansprüche, wobei der unter der argonhaltigen Atmosphäre in dem Ofen selektiv erzeugte Druck in einem Bereich von 5,0 Pa bis 77,2 Pa liegt.

9. Verfahren nach einem der vorstehenden Ansprüche, wobei der Einlass und der Auslass zum Laden und Entladen der Metalllegierung in den und aus dem Ofen dienen.

10. Verfahren nach einem der vorstehenden Ansprüche, wobei der unter der argonhaltigen Atmosphäre in dem Ofen selektiv erzeugte Druck durch schräges Anheben des Einlasses und des Auslasses erhöht wird.

11. Verfahren nach einem der vorstehenden Ansprüche, wobei die Atmosphäre nur Argon aufweist.

## Revendications

1. Procédé pour le traitement thermique d'un alliage métallique comprenant un ou plusieurs composants volatils, le procédé comprenant le chauffage de l'alliage dans un four tunnel sous une atmosphère contenant de l'argon, **caractérisé en ce que** la pression sélectivement produite sous l'atmosphère contenant de l'argon dans le four est ajustable en régulant la hauteur d'une entrée et/ou d'une sortie, ladite entrée et ladite sortie servant de têtes, et elle dépasse la pression de l'air.

2. Procédé suivant la revendication 1, dans lequel le métal volatil est au moins un ou plusieurs éléments parmi le zinc, le manganèse, le chrome et l'aluminium.

3. Procédé suivant la revendication 1 ou 2, dans lequel l'alliage métallique est un acier inoxydable.

4. Procédé suivant l'une quelconque des revendications précédentes, où le procédé comprend en outre l'utilisation d'une soudure à base de nickel comprenant du chrome et le traitement thermique comprend le brasage de l'acier avec la soudure.

5. Procédé suivant la revendication 1 ou 2, dans lequel l'alliage métallique est un article fabriqué en moulant des poudres d'acier inoxydable et le traitement thermique comprend le frittage de l'article.

6. Procédé suivant la revendication 5, dans lequel l'alliage métallique est un article fabriqué en moulant des poudres d'acier inoxydable contenant du manganèse.

7. Procédé suivant la revendication 1 ou 2, dans lequel l'alliage métallique est un laiton comprenant du zinc et le procédé comprend en outre l'utilisation d'une soudure d'argent contenant du zinc et le traitement thermique comprend le brasage du laiton avec la soudure d'argent.

8. Procédé suivant l'une quelconque des revendications précédentes, dans lequel la pression sélectivement produite sous l'atmosphère contenant de l'argon dans le four est dans un intervalle de 5,0 Pa à 77,2 Pa.

9. Procédé suivant l'une quelconque des revendications précédentes, dans lequel ladite entrée et ladite sortie servent au chargement et au déchargement de l'alliage métallique dans le four et à partir de celui-ci.

10. Procédé suivant l'une quelconque des revendications précédentes, dans lequel la pression sélectivement produite sous l'atmosphère contenant de l'argon dans le four est augmentée en élevant obliquement l'entrée et la sortie.

11. Procédé suivant l'une quelconque des revendications précédentes, dans lequel l'atmosphère ne comprend que de l'argon.
